# EUROPEAN PATENT APPLICATION

(11) **EP 2 119 576 A1**
(43) Date of publication of application: **18.11.2009**
(21) Application number: 07792788.7
(22) Date of filing: 21.08.2007
(51) Int. Cl.: B60C 17/00, B60C 5/00, B60C 15/06

(54) **PNEUMATIC TIRE AND VEHICLE WITH PNEUMATIC TIRE**

(30) Priority: 26.12.2006 JP 2006349626
(71) Applicant: Bridgestone Corporation, Tokyo 104-8340 (JP)
(72) Inventor: YAMAURA, Tsuneyoshi, Kodaira-shi Tokyo 187-8531 (JP)
(74) Representative: Whalley, Kevin
(86) International application number: PCT/JP2007/066176
(87) International publication number: WO 2008/078431

(57) **Abstract**

A side-reinforced run-flat tire with improved run-flat durability and riding comfort is easily compression-molded using a conventional bladder. The tire includes a tread (2), shoulder portions (3), side walls (4), and beads (5), each including a bead core (6) and a bead filler (7). A carcass ply (8) having a main part (8a) and a folded part (8b) extending from a crown (9) along the inner sides of the shoulder portions (3) and the side walls (4) to the beads (5), and folded around the outer surfaces of bead cores (6) from the inner sides to the outer sides of the bead cores in the tire width direction so as to run up in the tire radial direction outwardly. Reinforcement rubber layers (11) are widthwise provided on the inner sides of the side walls (4). A bead-reinforcing layer (12) is provided on a side (left in drawing) undergoing larger stress during run-flat driving. The rubber layers, which are symmetric with respect to the equator, enable the tire to be easily compression-molded using a conventional bladder.

## Description

### Technical Field

The present invention relates to a pneumatic tire and a vehicle equipped with the same, and in particular, relates to a run-flat tire capable of being driven after puncture and a vehicle equipped with the same.

### Background Art

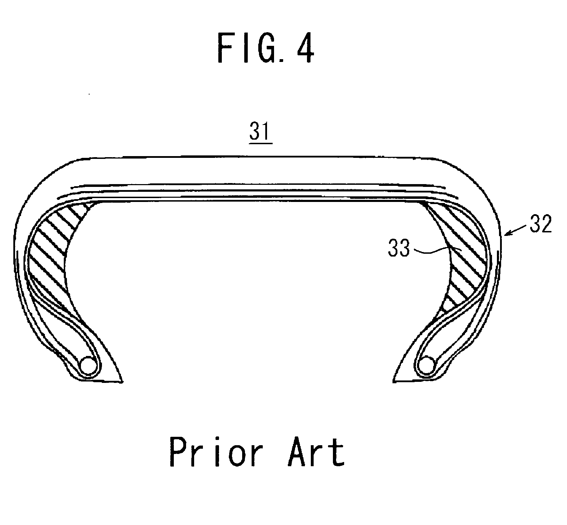

Among pneumatic tires for vehicles, a run-flat tire is known which is capable of being driven a predetermined distance even after its puncture during travelling. A so-called side-reinforced run-flat tire is an example having a configuration that extends a distance to travel after puncture (hereinafter, driving of a tire after the tire becomes flat is referred to as run-flat driving, and the distance travelled by the tire is referred to as run-flat durability) : in which, as shown in Fig. 4, a tire 31 includes side walls 32 with wide reinforcement rubber layers 33 having an approximately crescent cross section being mounted inwardly in the tire width direction, so that the stiffness of the side walls 32 is enhanced to counteract the stress applied to the tire at the time of puncture and to reduce the deflection of the tire at a maximum width portion thereof (Patent Literature 1).

The stress and deformation applied to a tire during run-flat driving are asymmetric due to factors including the camber angle of a wheel, which causes problems on a side-reinforced run-flat tire of the conventional symmetric structure in terms of durability and riding comfort.

For example, during run-flat driving, the larger positive camber angle of a wheel causes the larger stress on the inner side wall of a tire with respect to the vehicle body than the stress on the opposite side wall of the tire (the outer one with respect to the vehicle body), which leads to early breakage of the inner side wall of the tire. In order to prevent this from occurring, a tire is known, the tire having right and left reinforcement rubber layers in the tire width direction, with the inner one when vehicle-mounted being larger than the other (Patent Literature 2).

A puncture of a side-reinforced run-flat tire causes the vehicle equipped with the tire to tilt toward the punctured tire by an amount that corresponds to a reduction in the dynamic loaded radius of the tire, which applies a remarkably larger stress on the outer side wall of the punctured tire of the vehicle than the stress on the inner side wall of the tire. The maximum flexure point on the outer side wall of the puncture tire of the vehicle is significantly offset toward the tread thereof (radially outward) from the full width point of the tire. However, a conventional side-reinforced run-flat tire is provided with a reinforcement rubber layer that has a maximum width at a position corresponding to the full width point of the tire, thereby the reinforcement rubber layer does not have an enough thickness at a maximum flexure point for a puncture, which may result in the above described early breakage. As a solution of this problem, a tire is known which has a reinforcement rubber layer in an outer side wall of the tire when being mounted to a vehicle, the layer having the full width point which is shifted toward a tread as compared to that of reinforcement rubber layer in the side wall of a conventional general side-reinforced run-flat tire (Patent Literature 3).

In addition, in order to prevent the troubles of a front wheel, during run-flat driving, caused by the stress concentrated on the outer side wall of a vehicle-mounted front wheel, and also to prevent the troubles of a rear wheel caused by the stress concentrated on the inner side wall of a vehicle-mounted rear wheel, a side-reinforced run-flat tire having right and left reinforcement rubber layers of different thicknesses in the tire width direction has been proposed, in which the tire is mounted to a vehicle as a front wheel so that the thicker reinforcement rubber layer is on the outer side with respect to the vehicle body, and the tire is mounted to the vehicle as a rear wheel so that the thicker reinforcement rubber layer is on the inner side with respect to the vehicle body (Patent Literature 4).

### Citation List

[Patent Literature 1] Japanese Unexamined Patent Application Publication No. 2001-180234 (Fig. 3)
[Patent Literature 2] Japanese Unexamined Patent Application Publication No. 55-79707 (from page 4, right lower column, line 4 to page 5, left upper column, line 17)
[Patent Literature 3] Japanese Unexamined Patent Application Publication No. 6-219112 (Paragraphs: 0024 to 0028)
[Patent Literature 4] Japanese Unexamined Patent Application Publication No. 10-138719 (Paragraphs: 0009 to 0011 and 0012 to 0014)

### Summary of Invention

### Technical Problems

Unfortunately, the run-flat tires described in Patent Literature 2 to 4, which were developed to improve run-flat durability by providing the right and left reinforcement rubber layers geometrically asymmetric with respect to the equator, have the following disadvantages:
(1) a tire that is molded to have a symmetric outer profile with respect to the equator should have an asymmetric inner profile with respect to the equator; and
(2) it is difficult to set up a carcass line and to control it during manufacturing.
The above disadvantages create difficulties in increasing the asymmetrization of the tire, and preclude compression molding of the tire using a conventional bladder, thereby making it difficult to produce an asymmetric tire and also to optimize the arrangement of the asymmetrized tire. As a result, the run-flat durability and riding comfort of such a side-reinforced run-flat tire cannot be significantly improved.

The present invention has been made in view of the above problems, and a first object of the present invention is to provide a side-reinforced run-flat tire with improved run-flat durability and riding comfort that can be easily compression-molded using a conventional bladder.
A second object of the present invention is to provide an appropriate arrangement to mount such side-reinforced run-flat tires to a vehicle in view of the asymmetry of the stress and deformation applied to the tire during run-flat driving.

### Solution to Problem

A first aspect of the present invention is a pneumatic tire including: a tread; a pair of side walls extending from the right and left sides, respectively, of the tread inward in the tire radial direction;
a pair of beads extending from the respective side walls, each bead having a bead core and a bead filler; a carcass ply extending from the tread along the side walls to the beads, and being folded around the outer surfaces of the bead cores from the inner sides to the outer sides of the bead cores in the tire width direction so as to run up in the tire radial direction outwardly; and a pair of right and left reinforcement rubber layers respectively provided in the inner sides of the side walls in the tire width direction, one of the pair of the beads being a reinforced bead that suppresses deflection of the side wall during run-flat driving.
This structure suppresses the deflection of the side wall during run-flat driving by the reinforced bead, improving run-flat durability.

A second aspect of the present invention is the pneumatic tire according to the first aspect in which the reinforced bead is reinforced with a bead-reinforcing layer provided in the tire radial direction in the bead.
This structure suppresses the deflection of the side wall during run-flat driving by the bead-reinforcing layer provided in the tire radial direction in the bead, improving run-flat durability.

A third aspect of the present invention is the pneumatic tire according to the second aspect in which the bead-reinforcing layer has an upper end in the tire radial direction at a position that is at about 30% or more of the tire height and at 80% or less of the height of the carcass ply having a maximum width.
This structure improves run-flat durability without degrading riding comfort during normal driving.

A fourth aspect of the present invention is the pneumatic tire according to the second or third aspect in which the bead-reinforcing layer has an lower end in the tire radial direction at a position above the upper end of the bead core and at about 15% or less of the tire height.
This structure improves run-flat durability without impairing normal operation performance.

A fifth aspect of the present invention is the pneumatic tire according to any one of the second to fourth aspects in which the bead-reinforcing layer is arranged on the outside of the folded part of the carcass ply, between the folded part of the carcass ply and the bead filler, or between the bead filler and the extension of the carcass ply.
This structure increases the stiffness by the interlocking lamination of the bead-reinforcing layer and the carcass ply, improving run-flat durability.

A sixth aspect of the present invention is the pneumatic tire according to any one of the second to fifth aspects in which the bead-reinforcing layer is a ply that includes steel cord or steel wire therein.
This structure enables the bead-reinforcing layer to exhibit stiffness stable at high temperature, improving run-flat durability at high temperature.

A seventh aspect of the present invention is the pneumatic tire according to the first aspect in which the reinforced bead is reinforced by a first bead filler that has an elastic modulus higher than the elastic modulus of a second bead filler of the other bead.

An eighth aspect of the present invention is the pneumatic tire according to the seventh aspect in which the elastic modulus of the first bead filler is 125 to 150% that of the second bead filler.

The pneumatic tire according to the seventh or eighth aspect suppresses the deflection of the side wall during run-flat driving by the bead filler having a higher elastic modulus, improving run-flat durability.

A ninth aspect of the present invention is the pneumatic tire according to the seventh or eighth aspect in which the first bead filler has an upper end in the tire radial direction at a position that is at about 50% or less of the tire height.
This structure improves run-flat durability without degrading riding comfort during normal driving.

A tenth aspect of the present invention is a vehicle equipped with a pneumatic tire, including the pneumatic tire according to any one of the first to ninth aspect that is mounted to the vehicle so that the reinforced bead resides at a position undergoing relatively large stress during run-flat driving.

An eleventh aspect of the present invention is the vehicle equipped with a pneumatic tire according to the tenth aspect in which the tire is mounted to a wheel having a zero or positive camber angle such that the reinforced bead resides on the outer side of the vehicle.

A twelfth aspect of the present invention is the vehicle equipped with a pneumatic tire according to the tenth or eleventh aspect in which the tire is mounted to a wheel having a negative camber angle such that the reinforced bead resides on the inner side of the vehicle.

A thirteenth aspect of the present invention is the vehicle equipped with a pneumatic tire according to any one of the tenth to twelfth aspects in which the tire is mounted to a front wheel such that the reinforced bead resides on the outer side of the vehicle, or mounted to a rear wheel such that the reinforced bead resides on the inner side of the vehicle.

The vehicle equipped with a pneumatic tire according to the tenth to thirteenth aspects has the pneumatic tire according to the present invention mounted thereto in the appropriate way in view of the stress and deformation applied to the tire during run-flat driving, which allows the tire to effectively maximize its performance, resulting in improved run-flat durability.

### Advantageous Effects of Invention

A pneumatic tire according to the present invention includes reinforcement rubber layers symmetric with respect to the equator, and a pair of beads with one bead being a reinforced bead that suppresses deflection of the side wall during run-flat driving, which eliminates the need of the asymmetric inner profile for a symmetric outer profile of the tire. Accordingly, a side-reinforced run-flat tire having improved run-flat durability and riding comfort can be easily compression-molded using a conventional bladder.
A vehicle equipped with a pneumatic tire according to the present invention includes a pneumatic tire according to the present invention that is mounted to the vehicle so that the reinforced bead is positioned to be under a relatively larger stress during run-flat driving, which allows the tire to effectively provide its performance, resulting in improved run-flat durability.

### Brief Description of Drawings

Fig. 1 is a cross sectional view illustrating a pneumatic tire according to a first embodiment of the present invention.
Fig. 2 is a cross sectional view illustrating a pneumatic tire according to the first embodiment of the present invention.
Fig. 3 is a table showing examples of a vehicle equipped with pneumatic tires according to the first and second embodiments of the present invention.
Fig. 4 is a cross sectional view illustrating a conventional side-reinforced run-flat tire.

### Reference Signs List

- 1, 21: pneumatic tire
- 2: tread
- 4: side wall
- 5: bead
- 6: bead core
- 7: bead filler
- 8: carcass ply
- 8a: main part
- 8b: folded part
- 9: crown
- 11: reinforcement rubber layer
- 12: bead-reinforcing layer
- 22: high modulus bead filler

### Description of Embodiments

Embodiments of the present invention will be described below with reference to the drawings.

### (First Embodiment)

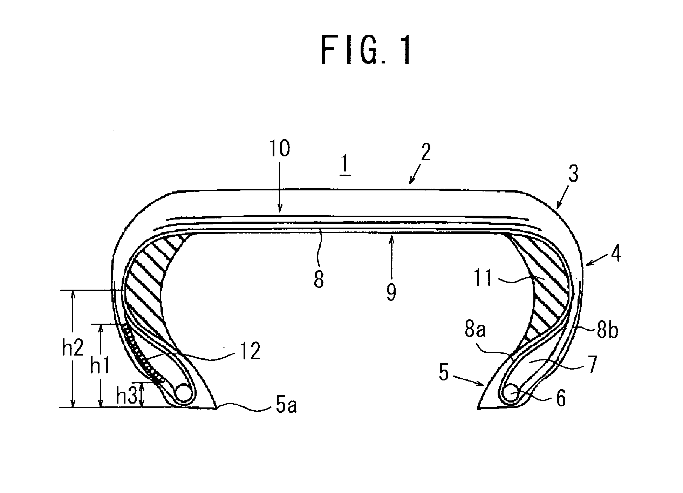

Fig. 1 is a cross sectional view illustrating a pneumatic tire according to a first embodiment of the present invention. Apneumatic tire 1 is composed of rubber layers as a whole, and includes a tread 2 that comes into contact with a road surface, a pair of shoulder portions 3 extending from the both sides of the tread 2 inwardly in the radial direction of the tire 1, that is, toward a wheel (not shown), a pair of side walls 4 continuous from the shoulder portions 3, beads 5 continuous from the side walls 4 to be brought into contact with the wheel.

Each bead 5 is provided with a bead core 6 that secures the tire 1 to the wheel against the air pressure of the tire 1, and a bead filler 7 that increases the stiffness of the bead 5. A carcass ply 8 composed of a main part 8a and a folded part 8b is further provided, the ply 8 toroidally extending from a crown 9, that is positioned radially inward of the tread 2, along the inner sides of the shoulder portions 3 and the side walls 4 to the beads 5, and being folded around the outer surfaces of bead cores 6 in the tire axis direction from the inner sides to the outer sides of the bead cores in the tire width direction so as to run up in the tire radial direction outwardly. The carcass ply 8 reinforces the rubber layers of the tire 1, and determines the profile of the entire tire.

The carcass ply 8 adjacent the tread in the crown 9 is provided with a belt 10 composed of two belt layers for fastening the carcass ply 8 to increase the stiffness of the tread 2, in the circumferential direction of the tire 1. Each side wall 4 is provided with a wide reinforcement rubber layer 11 having an approximately crescent cross section inward in the tire width direction, in the circumferential direction of the tire 1.

The above configuration is basically the same as that of a conventional side-reinforced run-flat tire. The pneumatic tire 1 of this embodiment further includes a bead-reinforcing layer 12 between the bead filler 7 of one of the pair of the beads 5 (the left one in drawings) and the folded part 8b of the carcass ply 8. The bead-reinforcing layer 12 suppresses deflection of the side wall under larger stress (the left one in Fig. 1), improving run-flat durability. The reinforcement rubber layer 11 symmetric with respect to the equator eliminates the need of an asymmetric inner profile with respect to the equator that is required for achieving a symmetric outer profile of the pneumatic tire 1, particularly a symmetric outer profile of the side walls 4 with respect to the equator, thereby the tire 1 can be easily compression-molded using a conventional bladder. Next, the positioning of the bead-reinforcing layer 12 is described below.

The bead-reinforcing layer 12 is radially positioned to the tire 1 to cover the area undergoing maximum stress during run-flat driving of the tire 1 mounted to a vehicle. The experiments with a tire (tire size: 245/40R18 in accordance with JATMA YEAR BOOK 2006) demonstrated that the area radially outward (upward in Fig. 1) 20 mm ± 15% thereof (i.e., 20 mm ± 3 mm) away from a bead base 5a underwent maximum shear stress caused by the upward movement of a rim flange during run-flat driving. Accordingly, in this embodiment, preferably the bead-reinforcing layer 12 is arranged to cover the area. Specifically, the tire (tire size: 245/40R18) has a height of 245 mm × 0.4 = 98 mm based on a tire width of 245 mm and an aspect ratio of 40%, and the sizes 20 mm and 3 mm correspond to about 20% and 3%, respectively, of the tire height of 98 mm. Based on the above result, even in the case of tires of other sizes, the bead-reinforcing layer 12 maybe preferably positioned to cover an area away from the bead base 5a, the area residing at about 20% ± 3% of the tire height.

The above area in the radial direction is identical regardless of the polarity of the camber angle of a wheel. During cornering, however, in the case of a wheel having a positive camber angle, the bead on the side toward the outside of the vehicle body undergoes maximum shear stress, whereas in the case of a wheel having a negative camber angle, the bead on the side toward the center of the vehicle body undergoes maximum shear stress. In the former case, the bead-reinforcing layer 12 is mounted to a wheel so as to be positioned on the outer side of the vehicle body; whereas in the latter case, the bead-reinforcing layer 12 is mounted to a wheel so as to be positioned on the inner side of the vehicle body. The case where four tires 1 are mounted to a vehicle, relevant to a second embodiment, will be described after the description of the second embodiment.

To maintain riding comfort during normal driving, any excess stiffness at the area radially outward from a maximum width of the carcass is not desirable. The experiment conducted by the inventor showed that the height h1 of the upper end of the bead-reinforcing layer 12 from the bead base 5a is preferably 30 mm or more and 80% or less of the height h2 of the main part 8a having a maximum width of the carcass ply 8 from the bead base 5a. Because the height of 30 mm is about 30% of the tire height of 98 mm (tire size: 245/40R18), the height h1 may be preferably about 30% or more of the tire height from the bead base 5a, and 80% or less of the height of the main part 8a having a maximum width of the carcass ply 8.

The bead-reinforcing layer 12 may be provided as an insert, flipper, chafer, or the like. When provided as a flipper or chafer, because the lower end of the reinforced layer extends to a position lower than the bead core 6, the bead 5 and the rim contact with each other in different ways between the sides with and without the bead-reinforcing layer, which may adversely affect the normal driving performance. Thus, preferably, the bead-reinforcing layer 12 is provided as an insert as shown in Fig. 1, and the height h3 of its lower end from the bead base 5a is above that of the upper end of the bead core 6 and 15 mm or less. Because the height of 15 mm is about 15% of the tire height of 98 mm (tire size: 245/40R18), the height h3 of the lower end of the bead-reinforcing layer 12 from the bead base 5a may be preferably above that of the upper end of the bead core 6 and about 15% or more of the tire height.

The bead-reinforcing layer 12 as an insert may be positioned anywhere in the wheel axis direction (the lateral direction in Fig. 1), but is preferably positioned the outer side of the folded part 8b of the carcass ply 8, between the folded part 8b of the carcass ply 8 and the bead filler 7 (Fig. 1 shows this case), or between the bead filler 7 and the main part 8a of the carcass ply 8. The positioning provides the interlocking lamination of the bead-reinforcing layer and the carcass ply, which increases the stiffness.

The bead-reinforcing layer 12 may be a ply having steel cords, steel wires, or organic fiber cords embedded in rubber thereof, non-woven fabric coated with rubber, or hard rubber. Especially, the ply having steel cords or steel wires embedded in rubber thereof is preferable in terms of stable stiffness even at high temperature.

### (Second Embodiment)

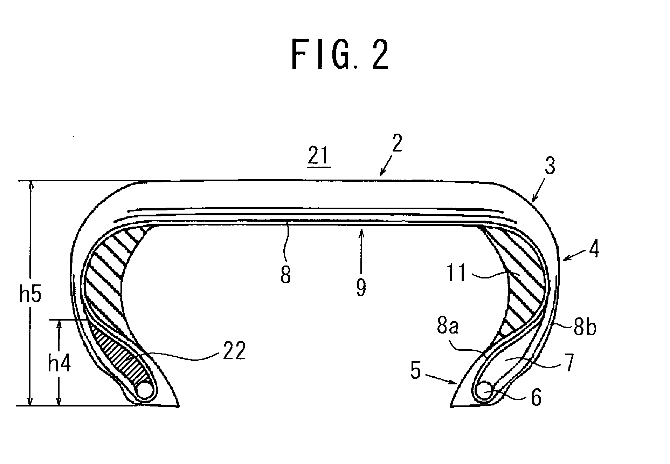

Fig. 2 is a cross sectional view illustrating a pneumatic tire according to a second embodiment of the present invention. The parts of a pneumatic tire 21 that are identical to or correspond to those of Fig. 1 are referred to by the same reference numerals as those in Fig. 1. The pneumatic tire 21 of this embodiment is characterized by that, instead of the bead-reinforcing layer 12, a high modulus bead filler 22 is provided to one of the beads 5 (the left one in Fig. 2). The other elements of the pneumatic tire 21 are the same as those of the first embodiment, which will not be described below.

In the pneumatic tire 21 of this embodiment, the high modulus bead fillers 22 suppress deflection of the side walls under a larger stress (the left one in Fig. 2), improving run-flat durability. The reinforcement rubber layers 11 symmetric with respect to the equator eliminates the need of an asymmetric inner profile with respect to the equator that is required for a symmetric outer profile of the pneumatic tire 21, particularly a symmetric outer profile of the side walls 4 with respect to the equator, thereby the tire 21 can be easily compression-molded using a conventional bladder.

The high modulus bead filler 22 preferably has an elastic modulus that is 125 to 150% of that of the bead filler 7.

The positioning of the high modulus bead fillers 22 in the radial direction and the rotation axis direction of the tire 21 will be described below. First, in the radial direction of the tire 21, as in the first embodiment, the high modulus bead fillers 22 is positioned to cover an area undergoing the maximum stress during run-flat driving of a vehicle equipped with the tire 21. The area of a tire (tire size: 245/40R18) is at a position being 20 mm ± 15% thereof radially outward from a bead base 5a. Then, as a condition for maintaining riding comfort during normal driving, the height h4 of the high modulus bead filler 22 from the bead base 5a is preferably 50% or less of the height h5 of the cross section of the tire 21. The position of the bead filler 7 may be the same as or different from that of the high modulus bead filler 22.

Next, examples will be described below in which four pneumatic tires of the first and second embodiments are mounted to four wheels of a vehicle. The pneumatic tires of the first and second embodiments are mounted, in principle, such that the bead 5 having the bead-reinforcing layer 12 (the first embodiment) or the high modulus bead filler 22 (the second embodiment) is on the side undergoing a larger stress in cornering during run-flat driving.
(I) Front wheels usually have a positive camber angle of 0.5 to 2°, thereby the outer side of the vehicle body is under a larger stress in cornering during run-flat driving. Thus, the pneumatic tires are each mounted such that the bead 5 having the bead-reinforcing layer 12 or the high modulus bead filler 22 is on the outer side of the vehicle body. This suppresses deflection on the side undergoing a larger stress of the front wheels in cornering, improving run-flat durability.

(II) In the case of rear wheels having a 0° or positive camber angle, similar to the front wheels, the outer side of the vehicle body undergoes a larger stress in cornering during run-flat driving. Thus, the pneumatic tires are each mounted such that the bead 5 having the bead-reinforcing layer 12 or the high modulus bead filler 22 is on the outer side of the vehicle body. This suppresses deflection on the side undergoing a larger stress of the rear wheels in cornering, improving run-flat durability.

(III) In the case of rear wheels having a negative camber angle, the inner side of the vehicle body undergoes a larger stress in cornering during run-flat driving. Thus, the pneumatic tires are each mounted such that the bead 5 having the bead-reinforcing layer 12 or the high modulus bead filler 22 is on the inner side of the vehicle body. This suppresses deflection on the side having higher contact pressure and undergoing a larger stress of the rear wheels, improving run-flat durability.

In any one of the said (I) to (III), because the side undergoing a larger stress is intensively reinforced, the run-flat durability comparable with conventional levels can be maintained even if the other side has an elastic modulus lower than a conventional one. This provides a smaller (lower) vertical spring constant for the entire tire as compared to a tire having symmetric beads 5, which leads to a further improvement in riding comfort under a normal inner pressure.

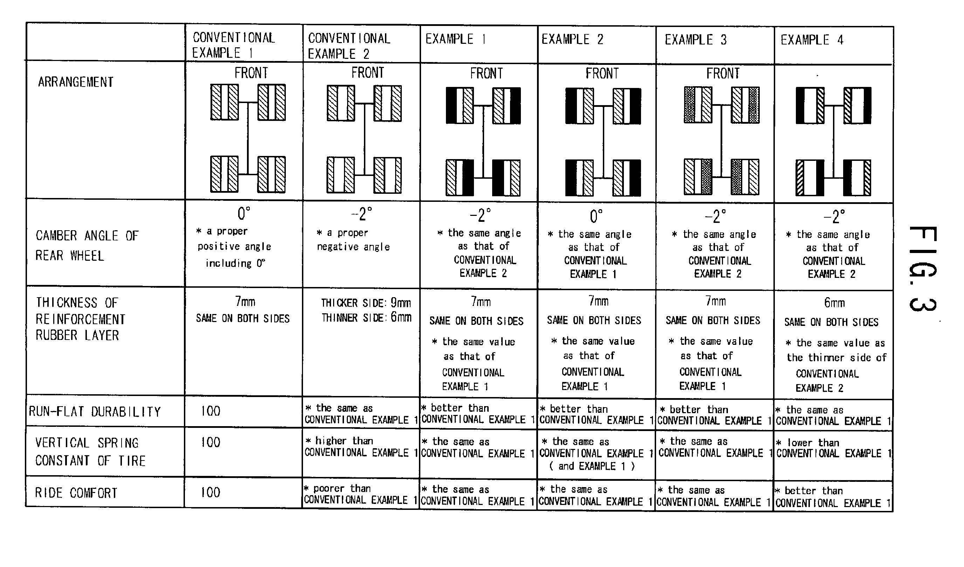

Fig. 3 is a table showing examples of a vehicle equipped with pneumatic tires of the first and second embodiments according to the said (I) to (III). In Fig. 3, throughout Example 1 to 4 and Conventional Example 1, 2, the tires have the same tire size (245/40R18), the same carcass ply (2-roll up ply), and the same belt (two steel belt layers, cap, and a layer), and the front wheels also commonly have a positive camber angle. To the contrary, the bead-reinforcing layer 12 of the second embodiment is interposed between the folded part 8b of the carcass ply 8 and the bead filler 7 as an insert as shown in Fig. 1, and is made of a ply including steel cords or steel wires embedded in rubber. The high modulus bead filler 22 of the second embodiment has an elastic modulus of 13 MPa (Mega Pascal), and the bead filler 7 has an elastic modulus of 10 MPa.

With reference to Fig. 3, Conventional Examples 1 and 2 and Examples 1 to 4 will be described below in detail. Fig. 3 illustrates schematic views of tires mounted to four wheels of a vehicle in the columns on arrangements, and the term "front" means forward. In each tire, the shaded area represents reinforcement rubber layer, the black area represents bead-reinforcing layer, and the mesh area represents high modulus bead filler.

In Conventional Example 1, four tires 31 shown in Fig. 4 are mounted to four wheels. The rear wheels may have any proper positive camber angle including 0°, and have a camber angle of 0° in this case. The right and left reinforcement rubber layers 33 have a thickness of 7 mm. Conventional Example 1 having the above configuration is normalized to 100 for run-flat durability, vertical spring constant, and riding comfort.

In Conventional Example 2, the rear wheels may have any proper negative camber angle, and have a camber angle of -2° in this case. For the rear wheels, the thickness of the reinforcement rubber layer on the outer side of the vehicle body has a thickness of 6 mm that is smaller than that of Conventional Example 1, and the thickness of the reinforcement rubber layer on the inner side of the vehicle body has a thickness of 9 mm that is larger than that of Conventional Example 1. For the front wheels in contrast to the rear wheels, the thickness of the reinforcement rubber layer on the outer side of the vehicle body has a thickness of 9 mm that is larger than that of Conventional Example 1, and the thickness of the reinforcement rubber layer on the inner side of the vehicle body has a thickness of 6 mm that is smaller than that of Conventional Example 1. Conventional Example 2 has run-flat durability corresponding to that of Conventional Example 1. Conventional Example 2 has a tire vertical spring constant higher than that of Conventional Example 1, resulting in poorer riding comfort than that of Conventional Example 1. Conventional Example 2 corresponds to the case disclosed in Patent Literature 4.

In Example 1, the rear wheels have a camber angle of -2° as in Conventional Example 2. The pneumatic tires 1 of the first embodiment are mounted. The right and left reinforcement rubber layers 11 have a thickness of 7 mm as in Conventional Example 1. The pneumatic tires 1 are arranged to front wheels and rear wheels according to the above said (I) and (III). Example 1 has better run-flat durability than that of Conventional Example 1, and tire vertical spring constant and riding comfort are comparable with those of Conventional Example 1. This means that the bead-reinforcing layer 12 can provide symmetrical reinforcement rubber layers 11 without increasing the thickness thereof, and improve run-flat durability.

In Example 2, the rear wheels have a camber angle of 0° as in Conventional Example 1. The pneumatic tires 1 of the first embodiment are mounted. The right and left reinforcement rubber layers 11 have a thickness of 7 mm as in Conventional Example 1. The pneumatic tires 1 are arranged to front wheels and rear wheels according to the above said (I) and (II). Example 2 has better run-flat durability than that of Conventional Example 1, and tire vertical spring constant and riding comfort are comparable with those of Conventional Example 1. This Example also provides symmetrical reinforcement rubber layers 11 without increasing the thickness thereof, and improved run-flat durability, as in Example 1.

In Example 3, the rear wheels have a camber angle of -2° as in Conventional Example 2. The pneumatic tires 21 of the second embodiment are mounted. The right and left reinforcement rubber layers 11 have a thickness of 7 mm as in Conventional Example 1. The pneumatic tires 21 are arranged to front wheels and rear wheels according to the above said (I) and (III). Example 3 has better run-flat durability than that of Conventional Example 1, and tire vertical spring constant and riding comfort are comparable with those of Conventional Example 1. This Example having the high modulus bead filler 22 also provides symmetrical reinforcement rubber layers 11 without increasing the thickness thereof, and improves run-flat durability, as in Examples 1 and 2.

In Example 4, the rear wheels have a camber angle of -2° as in Conventional Example 2. The pneumatic tires 1 of the first embodiment are mounted. The right and left reinforcement rubber layers 11 have a thickness of 6 mm as in the thinner side of Conventional Example 2. The pneumatic tires 1 are arranged to front wheels and rear wheels according to the above said (I) and (III) as in Example 1. In other words, in Example 4, the thickness of the reinforcement rubber layer 11 is reduced compared to Example 1. Example 4 has run-flat durability comparable with that of Conventional Example 1, and a smaller tire vertical spring constant than that of Conventional Example 1, resulting in better riding comfort than that of Conventional Example 1. Example 4 having the bead-reinforcing layer 12 can provide symmetrical reinforcement rubber layers 11 thinner than those of Conventional Example 2, and the performance comparable with that of Conventional Example 2.

### Industrial Applicability

The present invention is useful as a run-flat tire that can be easily compression-molded, has high run-flat durability, and provides excellent riding comfort.

## Claims

1. A pneumatic tire comprising:
a tread;
a pair of side walls extending from the right and left sides, respectively, of the tread inward in the tire radial direction;
a pair of beads extending from the respective side walls, each bead having a bead core and a bead filler;
a carcass ply extending from the tread along the side walls to the beads, and being folded around the outer surfaces of the bead cores from the inner sides to the outer sides of the bead cores in the tire width direction so as to run up in the tire radial direction outwardly; and
a pair of right and left reinforcement rubber layers respectively provided in the inner sides of the side walls in the tire width direction,
one of the pair of the beads being a reinforced bead that suppresses deflection of the side wall during run-flat driving.

2. The pneumatic tire according to claim 1, wherein
the reinforced bead is reinforced with a bead-reinforcing layer provided in the tire radial direction in the bead.

3. The pneumatic tire according to claim 2, wherein
the bead-reinforcing layer has an upper end in the tire radial direction at a position that is at about 30% or more of the tire height and at 80% or less of the height of the carcass ply having a maximum width.

4. The pneumatic tire according to claim 2 or 3, wherein
the bead-reinforcing layer has a lower end in the tire radial direction at a position above the upper end of the bead core and at about 15% or less of the tire height.

5. The pneumatic tire according to any one of claims 2 to 4, wherein
the bead-reinforcing layer is arranged on the outside of the folded part of the carcass ply, between the folded part of the carcass ply and the bead filler, or between the bead filler and the extension of the carcass ply.

6. The pneumatic tire according to any one of claims 2 to 5, wherein
the bead-reinforcing layer is a ply that includes steel cord or steel wire therein.

7. The pneumatic tire according to claim 1, wherein
the reinforced bead is reinforced by a first bead filler that has an elastic modulus higher than the elastic modulus of a second bead filler of the other bead.

8. The pneumatic tire according to claim 7, wherein
the elastic modulus of the first bead filler is 125 to 150% that of the second bead filler.

9. The pneumatic tire according to claim 7 or 8, wherein
the first bead filler has an upper end in the tire radial direction at a position that is at about 50% or less of the tire height.

10. A vehicle equipped with a pneumatic tire, comprising:
the pneumatic tire according to any one of claims 1 to 9 that is mounted to the vehicle so that the reinforced bead resides at a position undergoing relatively large stress during run-flat driving.

11. The vehicle equipped with a pneumatic tire according to claim 10, wherein
the tire is mounted to a wheel having a zero or positive camber angle such that the reinforced bead resides on the outer side of the vehicle.

12. The vehicle equipped with a pneumatic tire according to claim 10 or 11, wherein
the tire is mounted to a wheel having a negative camber angle such that the reinforced bead resides on the inner side of the vehicle.

13. The vehicle equipped with a pneumatic tire according to any one of claims 10 to 12, wherein
the tire is mounted to a front wheel such that the reinforced bead resides on the outer side of the vehicle, or mounted to a rear wheel such that the reinforced bead resides on the inner side of the vehicle.
